(19) **Europäisches Patentamt**
**European Patent Office**
**Office européen des brevets**

(11) **EP 3 385 834 A1**

(12) **EUROPÄISCHE PATENTANMELDUNG**

(43) Veröffentlichungstag:
**10.10.2018 Patentblatt 2018/41**

(51) Int Cl.:
***G06F 9/38*** *(2018.01)*

(21) Anmeldenummer: **17000558.1**

(22) Anmeldetag: **03.04.2017**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA MD**

(71) Anmelder:
• **Koenning, Jörg**
  **81539 München (DE)**

• **Weidner, Claudia**
  **81539 München (DE)**

(72) Erfinder:
• **Koenning, Jörg**
  **81539 München (DE)**
• **Weidner, Claudia**
  **81539 München (DE)**

(74) Vertreter: **Reich, Jochen**
  **Herrnstraße 15**
  **80539 München (DE)**

(54) **HARDWARETREIBER FÜR EFFIZIENTE ARITHMETIK**

(57)    Die Erfindung betrifft ein Verfahren zum effizienten Betreiben einer Mehrkernarchitektur und dient insbesondere als Treiber für entsprechende Komponenten. Erfindungsgemäß ist es möglich, eine mathematische Funktion derart aufzubereiten, dass zugrundeliegende Prozessoren vorteilhaft angesprochen werden können. Beispielsweise können sowohl Grafikkarten und CPUs die Funktionen parallelisiert berechnen. Ferner betrifft die vorliegende Erfindung eine entsprechend eingerichtete Vorrichtung bzw. eine Systemanordnung. Darüber hinaus wird ein Computerprogrammprodukt mit Steuerbefehlen vorgeschlagen, welche das Verfahren implementieren beziehungsweise die vorgeschlagene Anordnung betreiben.

Fig. 2

EP 3 385 834 A1

**Beschreibung**

Die Erfindung betrifft ein Verfahren zum effizienten Betreiben einer Mehrkernarchitektur und dient insbesondere als Treiber für entsprechende Komponenten. Erfindungsgemäß ist es möglich, eine mathematische Funktion derart aufzubereiten, dass zugrundeliegende Prozessoren vorteilhaft angesprochen werden können. Beispielsweise können sowohl Grafikkarten als auch CPUs die Funktionen parallelisiert berechnen. Ferner betrifft die vorliegende Erfindung eine entsprechend eingerichtete Vorrichtung bzw. eine Systemanordnung. Darüber hinaus wird ein Computerprogrammprodukt mit Steuerbefehlen vorgeschlagen, welche das Verfahren implementieren beziehungsweise die vorgeschlagene Anordnung betreiben.

DE 10 2015 005 310 A1 zeigt eine mathematische Bibliothek mit Steuerprogramm auf Mikroprozessor, wobei die mathematische Bibliothek mathematische Funktionen und Variablen als Zeichenketten interpretieren kann und die Eingaben am Mikroprozessor zur Berechnung der Ausgaben nutzt. Hierbei handelt es sich also um herkömmliche Operationen, die von einem Prozessor ausgeführt werden. Nicht gezeigt ist jedoch, wie eine bereitgestellte mathematische Funktion zu behandeln ist, damit sich ein Treiber vorteilhaft bereitstellen lässt.

Wikipedia, Die freie Enzyklopädie: "Eval", https://de.wikipedia.org/wiki/Eval, abgerufen am 14.3.2017, zeigt Eval als eine Funktion zur Metaprogrammierung, mit der ein Interpreter (oder das Paar Compiler/Laufzeitsystem) angewiesen wird, ein in der Programmiersprache selbst geschriebenes Codefragment, das als Datenobjekt vorliegt, auszuwerten und das Ergebnis der Berechnung zurückzuliefern.

Stand der Technik ist, dass es Mikroprozessoren gibt und darauf Steuerprogramme laufen. Allerdings ist die Logik, die die mathematischen Modelle beschreibt in den Steuerprogrammen enthalten, d. h. ein-kompiliert. Demzufolge sind bei notwendigen Änderungen der Steuerprogramme diese immer wieder neu zu entwickeln, zu kompilieren und zu verifizieren, sowie auf den jeweiligen Mikroprozessor aufzuspielen.

Bekannt sind sogenannte Compiler bzw. Übersetzer, die einen Quellkode einer Programmiersprache in eine maschinenlesbare Form übersetzen. Hierbei ist es bekannt, dass die Übersetzer entsprechende Optimierungen vornehmen. Ferner ist es bekannt einzelne Steuerbefehle bzw. Sammlungen von Steuerbefehlen mittels Bibliotheken bereitzustellen, auf die zugegriffen werden kann. Hierbei stellen sich jedoch besonders strenge Anforderungen an mathematische Bibliotheken, da es hierbei darauf ankommt, dass die Berechnungen sowohl performant als auch genau durchgeführt werden. Dies ist deshalb der Fall, da bei mathematischen Berechnungen wie Simulationen typischerweise große Datenmengen anfallen und gerade hier eine Optimierung notwendig ist.

Hierzu sind Verfahren bekannt, die eine Parallelisierung vornehmen und somit die Effizienz steigern. Ferner ist es jedoch notwendig, gerade bei mathematischen Operationen auch sicherzustellen, dass ein entsprechender Berechnungsfehler nicht zu groß ausfällt bzw. verhindert wird. So ist es bekannt, dass unendliche Zahlen bzw. unendliche viele Nachkommstellen auf einem endlichen Speicher nicht vollständig angezeigt werden können. Somit ist es also notwendig einen Anteil dieser Zahl abzuschneiden um hierbei überhaupt eine Repräsentation möglich zu machen. Jedoch entsteht hierbei der sogenannte Rundungsfehler, der auch derart relevant sein kann, dass es zu einer Auslöschung von Teilen einer Zahl kommt. Eine Auslöschung liegt dann vor, falls ein Ergebnis derart verfälscht wird, dass die Berechnung insgesamt nicht nur als ungenau sondern als falsch gilt.

Somit ist also stets die zugrunde liegende Hardwarestruktur bzw. die Rechnerarchitektur zu berücksichtigen und bei einem Berechnen von mathematischen Operationen sind hier Vorkehrungen zu treffen, die sicherstellen, dass ein entsprechendes Verfahren sowohl performant als auch akkurat arbeitet. Somit sind also mathematische Bibliotheken nicht mit herkömmlichen Bibliotheken zu vergleichen, da stets die zugrunde liegende Hardware berücksichtigt werden muss. Somit sind stets technische Überlegungen zu treffen, die darauf abstellen, dass eine Vielzahl von Operationen derart akkurat abläuft, dass sich ein entsprechender Fehler nicht aufaddiert und somit das Endergebnis unbrauchbar macht.

Trotz der strengen Anforderungen an die zugrunde liegende Hardware ist es ferner notwendig, dass die Steuerbefehle auf unterschiedlichen Architekturen ausgeführt werden können und, dass hierbei kein großer technischer Aufwand entsteht. So besteht eine Notwendigkeit ein entsprechendes Verfahren vorzuschlagen, welches sowohl performant als auch präzise arbeitet und hierbei auf einer Mehrzahl von Architekturen ausgeführt werden kann.

Somit ist es eine Aufgabe der vorliegenden Erfindung ein Verfahren zum maschinennahen Berechnen von geschlossenen mathematischen Funktionen mit beliebiger Anzahl von Operanden, welche mittels Operatoren verknüpft sind, vorzuschlagen. Ferner ist es eine Aufgabe der vorliegenden Erfindung eine entsprechend eingerichtete Systemanordnung bereitzustellen sowie ein Computerprogrammprodukt mit Steuerbefehlen vorzuschlagen, welche das Verfahren implementieren beziehungsweise die vorgeschlagene Systemanordnung zumindest teilweise betreiben.

Die Aufgabe wird gelöst durch ein Verfahren mit den Merkmalen gemäß Patentanspruch 1. Weitere vorteilhafte Ausgestaltungen sind in den Unteransprüchen angegeben.

Demgemäß wird ein Verfahren zur Verwendung in einer Mehrkernarchitektur und zum maschinennahen Berechnen von geschlossenen mathematischen Funktionen mit beliebiger Anzahl von Operanden vorgeschlagen, welche mittels Operatoren verknüpft sind, aufweisend ein Bereitstellen der mathematischen Funktion aufweisend die Operanden und die Operatoren in beliebigem Format, ein Überführen der bereitgestellten mathematischen Funktion in eine verkettete Liste, ein Spezifizieren der variablen Operanden und ein automatisches Auslesen mindestens eines Steuerbefehls, welcher geeignet ist den Operator auszuführen, aus einem bereitgestellten Operatorspeicher, ein Initialisieren der variablen Operanden anhand konkreter Parameter gemäß einem Dateityp und ein Anwenden der ausgelesenen Steuerbefehle auf die spezifizierten Operanden zur Berechnung der mathematischen Funktion unter Verwendung der verketteten Liste.

Das vorgeschlagene Verfahren ist zum maschinennahen Berechnen von geschlossenen mathematischen Funktionen geeignet, da Steuerbefehle bereitgestellt werden können, die die Berechnungen ausführen und beispielsweise kompiliert sein können. Eine geschlossene mathematische Funktion ist hierbei eine bereitgestellte mathematische Funktion, die eben nicht unendlich ist, sondern beispielsweise mittels einer textuellen Eingabe spezifizierbar ist. Somit ist die Bezeichnung als "geschlossen" im vorliegenden Kontext implizit und optional. Eine solche mathematische Funktion weist hierbei eine Mehrzahl von Operanden und eine Mehrzahl von Operatoren auf.

Besonders bevorzugt ist es, falls eine Vielzahl von Operanden und eine Vielzahl von Operatoren vorliegt, da der technische Effekt der Performanzsteigerung bzw. der Präzisionsverbesserung genau dann zum Tragen kommt, falls diverse Operanden und diverse Operatoren ausgeführt werden. Somit ist es bevorzugt, dass mindestens drei Operanden und mindestens fünf Operatoren zum Einsatz kommen. Hier stellt sich der Vorteil ein, dass trotz umfangreicher Berechnungen die zugrunde liegende Hardware optimal ausgenutzt werden kann und sich ein kleinerer Rundungsfehler einstellt, wie dies gemäß herkömmlicher Verfahren der Fall ist. Besonders bevorzugt kommen mehrere hundert Operanden und mehrere hundert Operatoren zum Einsatz.

Eine mathematische Funktion wird beispielsweise dadurch definiert, dass diese Operanden aus einer Trägermenge bereitstellt und diese mittels Operatoren, also Rechenoperationen, verknüpft werden. Hierzu können Variablen definiert werden, die ebenfalls Operanden darstellen. Somit gibt es also variable Operanden und statische bzw. konstante Operanden. So ist beispielsweise die Funktion $x + 1$ eine mathematische Funktion, die den Operanden $x$ als Variable und den Operanden 1 als statischen Operanden definiert. Der Operator ist dann die Plusfunktion. Eine solche mathematische Funktion kann erfindungsgemäß in einem beliebigen Format bereitgestellt werden, was wiederum besonders vorteilhaft ist. Somit kann also ein Benutzer bzw. eine Schnittstelle die mathematische Funktion auf irgendeine Art und Weise bereitstellen, die in darauffolgenden Verfahrensschritten optimiert wird. Bei einem beliebigen Format kann es sich beispielsweise um eine textuelle Eingabe handeln oder die mathematische Funktion wird mittels eines Datenformats anhand einer Schnittstelle maschinell bereitgestellt.

Die mathematische Funktion wird sodann in eine verkettete Liste überführt, wobei die verkettete Liste eine optimierte Darstellung der mathematischen Funktion bereitstellt. Eine verkettete Liste ist eine sequenzielle Repräsentation der mathematischen Funktion, die sich überraschenderweise besonders für Mehrkernarchitekturen eignet. Dies ist unter anderem deshalb der Fall, da die verkettete Liste linear eingelesen werden kann und zudem kann diese verkettete Liste besonders gut in Sequenzen unterteilt werden, die dann einer jeweils separaten Bearbeitung zugeführt werden können.

Hierbei ist es besonders vorteilhaft, dass die verkettete Liste eine Abfolge von Operanden und Operatoren aufweist, die vorzugsweise atomar ausgestaltet sind. Somit erfolgt also beispielsweise eine Darstellung einer Sinusfunktion derart, dass zuerst der Operand, also der Eingabewert, genannt wird und dann der Operator, also die Sinusfunktion. Jedoch ist es möglich die verkettete Liste derart zu unterteilen, dass diverse Sequenzen resultieren, die in ihrem Zusammenwirken die mathematische Funktion beschreiben. Hierbei, ist es besonders vorteilhaft, dass die einzelnen Sequenzen bereits derart ausgestaltet werden können, dass diese von unterschiedlichen Prozessoren bzw. Prozessorkernen abgearbeitet werden können. Somit entsteht eine Parallelisierung einzelner Sequenzen, also eine parallele Abarbeitung einzelner Sequenzen, die nach ihrer Berechnung wieder derart zusammengeführt werden, dass ein Endergebnis entsteht.

Ferner erfolgt ein Spezifizieren der Variablenoperanden, wobei dies für jeden variablen Operanden genau einmal durchgeführt werden muss. Beispielsweise weist eine mathematische Funktion eine Vielzahl von $x$ und $y$ auf. Somit ist es nicht notwendig, einen Vektor einzulesen oder eine Konfigurationsdatei, welche beschreiben, welche Operanden in welcher Instanz wie zu belegen sind. Vielmehr ist es möglich, einzelne Werte einzugeben, die jeweils beschreiben, wie die variablen Operanden belegt werden sollen. Somit ist es zwar generell auch möglich einen Vektor bereitzustellen oder eine Konfigurationsdatei, hierbei ist es jedoch nicht notwendig alle Vorkommen von variablen Operanden einzeln zu spezifizieren. Gemäß herkömmlicher Verfahren ist es üblich eine mathematische Operation mit fünf Operanden derart zu spezifizieren, dass eben auch ein Vektor mit fünf Werten bereitgestellt werden muss. Erfindungsgemäß ist es jedoch möglich, dass das Spezifizieren der variablen Operanden lediglich mittels eines Vektors erfolgt, der so viele Einträge aufweist, wie die mathematische Funktion unterschiedliche variable Operanden aufweist. Kommt also eine mathematische Funktion mit zwei variablen Operanden zur Ausführung, wobei diese beiden variablen Operanden sehr oft vorkommen, so ist es lediglich notwendig, einen Vektor bereitzustellen, der zwei Einträge aufweist. Somit kann also eine mathematische Funktion mit variablen Operanden derart spezifiziert werden, dass eine besonders kurze Eingabe möglich wird. Dies ist effizienter als bekannte Verfahren und zudem weniger fehleranfällig.

Ferner erfolgt ein automatisches Auslesen mindestens eines Steuerbefehls, welcher geeignet ist den Operator auszuführen. Somit handelt es sich also bei dem abgespeicherten Steuerbefehl um eine Implementierung des Operators. So ist es denkbar, dass eine Sinusfunktion auf unterschiedliche Arten implementiert wird und dass das Programm beispielsweise in Abhängigkeit der zugrunde liegenden Hardwarestruktur eine Implementierung auswählt. So kann es möglich sein bestimmte Operatoren mit 32 Bit oder mit 64 Bit zu berechnen. Dies kann zur Laufzeit spezifiziert werden und somit kann wiederum auf die zugrunde liegende Hardware Rücksicht genommen werden. Beispielsweise wird erkannt, dass ein bestimmter Speicherbereich nicht ausreicht um alle Stellen einer Zahl abzuspeichern. Falls dies erkannt wird, kann ein anderer Steuerbefehl bzw. eine Ansammlung von Steuerbefehlen gewählt werden, die mehr Speicherplatz vorsieht. Somit wird also zur Laufzeit dynamisch eingestellt, wie präzise die Berechnung abläuft. Somit kann also ein effizientes Datenformat verwendet werden und falls in einem Berechnungsschritt weitere Stellen benötigt werden, so kann auf einen umfangreichen Datentyp zurückgegriffen werden. Dieser stellt dann mehr Speicherplatz zur Verfügung, wodurch auch weitere Stellen berechnet werden können.

Zum Bereitstellen der Steuerbefehle bzw. der Implementierungen der Operatoren ist ein Operatorspeicher vorgesehen. Dieser kann beispielsweise innerhalb der Architektur verbaut werden und zur Laufzeit zugegriffen werden. Ferner ist es möglich den Operatorspeicher entfernt anzuordnen und netzwerktechnisch verfügbar zu machen. Dies bietet den Vorteil, dass der Operatorspeicher beispielsweise von einem Hersteller auf einer zentralen Recheninstanz gewartet und bereitgestellt werden kann. Somit wird also dem Endkunden die Implementierungsarbeit abgenommen und ein Hersteller kann eine Bibliothek bereitstellen, die für unterschiedliche Rechenarchitekturen geeignet ist.

Ein automatisches Auslesen kann deshalb erfolgen, da der Operator beschreibt, welche Funktion ausgeführt werden soll und somit kann der Operatorspeicher angefragt werden. Dieser Operatorspeicher stellt sodann den gewünschten Steuerbefehl bzw. die Steuerbefehle bereit, die den Operator umsetzen. Hierbei können die Steuerbefehle eine bestimmte Funktion implementieren, die bereits bekannt ist, wie beispielsweise eine Sinusfunktion, wobei es jedoch auch möglich ist, dass ein spezifischer Operator neu definiert wird und dass hierzu Steuerbefehle in dem Operatorspeicher hinterlegt werden, welche diesen Operator implementieren. Somit kann also jeder beliebige Operator mittels des Operatorspeichers bereitgestellt werden.

Die variablen Operanden der mathematischen Funktion werden spezifiziert und sodann auch initialisiert. So wird beispielsweise angegeben, dass die mathematische Funktion die Variablen x und y aufweist, welche dann mit konkreten Werten, also Zahlen, initialisiert werden. Hierbei ist es besonders vorteilhaft, dass zur Initialisierung der variablen Operanden genau ein Datentyp Verwendung findet. Somit werden Typkonversionen vermieden und es kommt nicht zu unerwarteten Rechenfehlern oder Ungenauigkeiten, da bei einem einheitlichen Datentyp stets vorhersehbar ist, ob die mathematische Funktion korrekt berechnet werden kann oder nicht. Somit wird also auch vermieden, dass bei einer Übersetzung in Maschinencode ein Rundungsfehler auftritt. Dies ist deshalb nicht der Fall, da der Datentyp in Abhängigkeit der zugrunde liegenden Hardware gewählt werden kann und somit der eine Datentyp genau auf entsprechende Speicher eingerichtet ist. Somit kann beispielsweise spezifiziert werden, wie viel Bit ein bestimmter Datentyp benötigt und somit kann auch die zugrunde liegende Hardwarestruktur gewählt werden. Wird das Verfahren auf einem bestehenden System zur Ausführung gebracht, so kann auch ausgelesen werden, wie viel Bit zum Speichern der Operanden zur Verfügung stehen und entsprechend kann auch der Datentyp gewählt werden. Somit ist es also besonders vorteilhaft, dass eine Inkompatibilität von Datentypen vermieden wird, wie dies gemäß herkömmlicher Verfahren oftmals der Fall ist. Es treten durch herkömmliche Verfahren überraschende Inkompatibilitäten auf, die zu einem Verfälschen des Endergebnisses führen und somit müssen diese Berechnungen manuell überprüft und nachgerechnet werden. Genau dies wird erfindungsgemäß vermieden.

Das Anwenden der ausgelesenen Steuerbefehle auf die spezifizierten und initialisierten Operanden heißt also, dass die bereitgestellten Steuerbefehle die Operanden als Eingabe nehmen und somit die Berechnung letztendlich durchführen. Somit beschreibt also der Schritt des Anwendens ein Berechnen der mathematischen Funktion anhand der einzelnen Sequenzen, aufweisend Operanden und Operatoren. Die verkettete Liste wird hierbei derart verwendet, dass einzelne Sequenzen separat, also parallel, abgearbeitet werden können. Bei den Operanden handelt es sich sowohl um statische Operanden, wie beispielsweise natürliche Zahlen, sowie um variable Operanden, welche in vorbereitenden Verfahrensschritten spezifiziert und initialisiert wurden. Somit werden alle Operanden, also statische Operanden und variable Operanden, ihrer Berechnung gemäß der mathematischen Funktion zugeführt. Somit können also generell Operanden in Konstante und in Variable unterteilt werden.

Hierbei ist es besonders vorteilhaft, dass die verkettete Liste, also die mathematische Funktion, typischerweise nicht am Stück abgearbeitet wird, sondern vielmehr werden einzelne Sequenzen aus der verketteten Liste herausgelöst und auf unterschiedliche Rechenkerne verteilt. Hierbei erkennt der Fachmann, dass das Anwenden iterativ so lange ausgeführt wird, bis alle Sequenzen der verketteten Liste berechnet sind und die Ausgabewerte der einzelnen Sequenzberechnungen wieder Operanden für ein neuerliches Berechnen bereitstellen. Somit wird also die verkettete Liste in Teilsequenzen unterteilt, die Teilsequenzen berechnet und die jeweiligen Ergebnisse wieder mittels der spezifizierten Operatoren berechnet. Somit erfolgt also ein iteratives Anwenden der ausgelesenen Steuerbefehle, wie es ein gerichteter Baum vorsieht, der an der Wurzel die mathematische Funktion vorsieht und an den Blättern die einzelnen Operanden.

Gemäß einem Aspekt der vorliegenden Erfindung erfolgt ein Zuweisen von Sequenzen der verketteten Liste, jede Sequenz aufweisend eine Teilmenge der bereitgestellten Operanden und bereitgestellten Operatoren, an Rechenkerne in Abhängigkeit einer ausgelesenen Anzahl von verfügbaren Rechenkernen. Dies hat den Vorteil, dass Rechenkerne parallelisiert arbeiten können und hierbei sogar eine Verteilung der Rechenkerne zur verteilten Berechnung in einem Netzwerk erreicht werden kann. Somit lässt sich also die zugrunde liegende Hardware skalieren und in Abhängigkeit eines Bedarfs können Rechenressourcen bereitgestellt werden. Sequenzen der verketteten Liste sind hierbei Teile der Liste, welche sequentiell dargestellt wird. Somit können also zusammenhängende Operatoren und Operanden herausgegriffen werden und parallelisiert abgearbeitet werden. Operatoren und Operanden stellen somit Sequenzen einer mathematischen Funktion da. Bezeichnet man die mathematische Funktion als Sequenz, so handelt es sich bei einer Teilmenge aus Operatoren und Operanden um Teilsequenzen. Die Anzahl der Rechenkerne kann voll ausgenutzt werden und Sequenzen können unterschiedlichen Rechenkernen zugeordnet werden. Voraussetzung hierbei ist lediglich, dass die Anzahl der Sequenzen mindestens der Anzahl der Rechenkerne entspricht. Ansonsten können freie Rechenkerne mit der Ausführung der Programmlogik, also dem Bereitstellen, Überführen, Spezifizieren, Initialisieren und/ oder Anwenden belegt werden.

Ein Überführen einer mathematischen Funktion kann gemäß einem Aspekt der vorliegenden Erfindung wie folgt erfolgen:

$$\sin(x) * \cos(y) + ...* 3 \qquad \text{(mathematische Funktion)}$$

$$x \Rightarrow \sin \Rightarrow y \Rightarrow \cos \Rightarrow + \Rightarrow... \Rightarrow * \Rightarrow 3 \qquad \text{(überführte mathematische Funktion)}$$

Somit werden also automatisiert Sequenzen wie "x => sin" oder "y => cos" gebildet, für deren parallele Berechnung Steuerbefehle, also mögliche Implementierungen, welche ausgewählt werden können, bereitstehen. Ferner kann die überführte mathematische Funktion eine Aufzählung der variablen Operanden "x_y" erhalten. Somit müssen also nicht alle Instanzen gesondert initialisiert werden, sondern es kann ein Vektor bereitgestellt werden, der nur eine Variablenbelegung initialisiert. So kann "x => sin => y => cos => x => sin => x => cos" mit "x_y" mittels des kurzen Vektors "3_5" initialisiert werden, und muss nicht mit "3_5_3_3" initialisiert werden. Somit wird keine Variable überspezifiziert bzw. zu oft spezifiziert, wie es der Stand der Technik zeigt. Die verkettete Liste trennt ferner die Operatoren und Operanden und kann somit leichter einer Parallelisierung zugeführt werden.

Gemäß einem weiteren Aspekt der vorliegenden Erfindung erfolgt das Zuweisen unter Verwendung von abgespeicherten Parallelisierungskriterien. Dies hat den Vorteil, dass vorab Parallelisierungskriterien abgespeichert werden und diese nach einem vorbereitenden Schritt auf die verkettete Liste, also die Sequenzen aufweisend Operanden und Operatoren, angewendet werden können. Somit beschreiben die Parallelisierungskriterien Regeln, die besagen, ob es bei Berechnungen Abhängigkeiten derart gibt, dass ein erstes Berechnungsergebnis von einem zweiten abhängt. Sind keine Abhängigkeiten gegeben, so können die Berechnungen auch parallelisiert ausgeführt werden. Somit können die Sequenzen dann auch unterschiedlichen Rechenkernen zugewiesen werden. Es werden bevorzugt disjunkte Sequenzen gebildet, die sich parallel berechnen lassen.

Gemäß einem weiteren Aspekt der vorliegenden Erfindung liegt die verkettete Liste als eine Abfolge jeweils atomarer Operanden und Operatoren vor. Dies hat den Vorteil, dass die verkette Liste eine Sequenz von abwechselnd einen Operand und einen Operator beschreibt, welche sich besonders einfach parallelisieren und initialisieren lassen. So muss um Gegensatz zu einer Initialisierung gemäß einem herkömmlichen Übergabewert jede einzelne Instanz einer Variablen initialisiert werden. Erfindungsgemäß kann für eine Variable ein Wert übergeben werden, der alle Instanzen der Variablen initialisiert. Dies ist insbesondere bei einer Vielzahl von Operanden und Operatoren von Vorteil, da hierdurch Aufwand eingespart wird und Fehlerquellen beseitigt werden. Insbesondere wird hierdurch auch Speicher eingespart, was gerade bei stark begrenzten Speichern von Prozessoren vorteilhaft ist.

Gemäß einem weiteren Aspekt der vorliegenden Erfindung werden Berechnungsergebnisse von Sequenzen mittels eines flüchtigen Speichers bereitgestellt. Dies hat den Vorteil, dass ein Speicher bereitgestellt wird, in dem die Ergebnisse von Berechnungen hinterlegt sind und somit kein neues Berechnen erfolgen muss, sondern vielmehr wird auf bereits vorhandene Ergebnisse verwiesen, welche ausgelesen werden können. Hierbei ist es besonders vorteilhaft, dass gerade flüchtige Speicher besonders schnell ausgestaltet sind und somit effizient und performant ein Ergebnis bereitgestellt werden kann. Somit werden bestimmte Sequenzen der mathematischen Funktion nicht berechnet, sondern lediglich deren Ergebnis ausgelesen. Hierbei kann eine Einzelfallentscheidung getroffen werden, ob eine Sequenz berechnet oder deren Ergebnis ausgelesen werden soll.

Gemäß einem weiteren Aspekt der vorliegenden Erfindung wird bei einem zweiten Berechnen einer Sequenz auf das Ergebnis eines ersten, vorherigen Berechnens dieser Sequenz zurückgegriffen. Dies hat den Vorteil, dass falls eine Sequenz berechnet wurde und hieraus das Ergebnis abgespeichert wurde, diese Sequenz bei einem neuerlichen Auftreten nicht erneut berechnet werden muss, sondern das bekannte Ergebnis verwendet werden kann. Somit wird Rechenkapazität eingespart und gerade bei umfangreichen Berechnungen wird der Prozessor nicht unnötig ausgelastet. Somit kann auch ein Ergebnis besonders genau berechnet werden und dieser vorteilhafte Wert wird wiederverwendet, ohne dass die komplexe Berechnung eines genauen Werts erneut durchgeführt werden muss.

Gemäß einem weiteren Aspekt der vorliegenden Erfindung erfolgt ein Abspeichern von und/ oder ein Zurückgreifen auf Ergebnisse von Berechnungen von Sequenzen in Abhängigkeit mindestens eines Betriebsparameters des flüchtigen Speichers und mindestens eines Betriebsparameters eines zu verwendenden Rechenkerns. Dies hat den Vorteil, dass entschieden werden kann, ob ein Abspeichern erfolgt, und falls dies erfolgt, ob dieses Ergebnis in späteren Verfahrensschritten wiederverwendet werden soll. So kann festgestellt werden, wie eine performante und genaue Berechnung durchgeführt werden kann. Es kann somit abgewogen werden, ob der Speicher bzw. in welchem Umfang der Speicher verwendet wird, oder ob der Rechenkern bzw. in welchem Umfang der Rechenkern verwendet wird. Steht viel Speicher zur Verfügung, welcher performant ist, so können mehr Ergebnisse abgespeichert und/ oder wiederverwendet werden und falls hingegen ein performanter Rechenkern oder Prozessor verfügbar ist, so kann dieser verwendet werden. Es kann also das Verhältnis zwischen abzuspeichernden und wiederverwendbaren Ergebnissen und zu berechnender Ergebnisse in Abhängigkeit verfügbarer Hardware eingestellt werden. Ein Rechenkern wird hiermit analog einem Prozessor verwendet, da ein Prozessor auch nur einen Rechenkern aufweisen kann. Ferner kann ein Prozessor oder Rechenkern als ein Mikrocontroller vorliegen.

Gemäß einem weiteren Aspekt der vorliegenden Erfindung umfasst das Abspeichern und/ oder das Zurückgreifen ein Auslesen mindestens eines Werts aus dem flüchtigen Speicher und dem zu verwendenden Rechenkern, wobei dieser Wert einen Hinweis auf eine Performanz der Berechnung bereitstellt. Dies hat den Vorteil, dass ausgelesen werden kann, ob eine Berechnung und ein Zugreifen auf den berechneten Wert einer wiederkehrenden Sequenz oder aber eine Berechnung und ein erneutes Berechnen einer wiederkehrenden Sequenz performanter ist. Performanz kann hierbei und generell im Kontext der vorliegenden Erfindung in Zeiteinheiten, beispielsweise Millisekunden, oder anhand von einer Anzahl benötigter Rechenschritten gemessen und beschrieben werden.

Gemäß einem weiteren Aspekt der vorliegenden Erfindung erfolgt das Abspeichern und/ oder das Zurückgreifen in Abhängigkeit eines Referenzberechnens einer Berechnungsgüte und/ oder einer Berechnungsperformanz. Dies hat den Vorteil, dass in einem vorbereitendem Testlauf eine Performanz und/ oder ein Fehler in Abhängigkeit der verwendeten Rechenkomponenten durchgeführt werden kann und zur Laufzeit dann feststeht, welche Sequenz am effizientesten berechnet bzw. das Ergebnis ausgelesen werden kann. Ein Referenzberechnen stellt somit auf einen Testlauf ab, der entsprechende Entscheidungskriterien behandelt und Parameter liefert, welche Performanz und/ oder einen Fehler beschreiben. Hierbei kann generell festgestellt werden, dass aufgrund des zugrundeliegenden Wertebereichs eine exakte Berechnung nicht möglich ist. Somit kann auf einen abgespeicherten Wert zurückgegriffen werden, oder es werden durch den potentiellen Fehler weitere Maßnahmen ausgelöst.

Gemäß einem weiteren Aspekt der vorliegenden Erfindung beschreibt die Berechnungsgüte einen Berechnungsfehler, der aufgrund eines verfügbaren Wertebereichs entsteht. Dies hat den Vorteil, dass die Berechnungsgüte in Abhängigkeit tatsächlich verwendeter Hardwarekomponenten wie zum Beispiel einem Rechenkern oder Prozessor ermittelt werden kann. Auch kann ein Speicher hierzu evaluiert werden. Der Wertebereich kann durch den Datentypen begrenzt werden, da nur eine bestimmte Anzahl von Nachkommastellen berechenbar ist. Somit kann der Wertebereich durch eine Anzahl von zur Verfügung stehender Bits oder generell Informationseinheiten begrenzt werden. Durch diese Begrenzung kann ein Runden notwendig werden, was einem Fehler entspricht.

Gemäß einem weiteren Aspekt der vorliegenden Erfindung wird optional bei einem Erkennen mindestens eines Rundungsfehlers bei einem Berechnen von Sequenzen automatisiert eine Intervallarithmetik zum Anwenden der ausgelesenen Steuerbefehle verwendet. Dies hat den Vorteil, dass ausgehend von einem Abrunden und einem Aufrunden festgestellt werden kann, in welchem Bereich sich ein korrekter Berechnungswert befindet. Somit können weitere Berechnungen anhand dieser Werte durchgeführt werden und es stellt sich ebenso ein Wertebereich eines möglichen minimalen Ergebnisses und eines maximalen Ergebnisses ein, in dem sich ein korrektes Endergebnis befindet. Somit kann beispielsweise ein Rundungsfehler eingegrenzt werden. Auch kann somit ein derart starker Rundungsfehler vermieden werden, der eine Auslöschung von Nachkommstellen bewirkt. Generell kann ein Rundungsfehler bereits zu einem solchen Auslöschen führen. Ein Beispiel hierfür ist das iterative Berechnen der zweiten Wurzel von 2. Hierdurch stellt sich letztendlich nach einer iterativen Annäherung der Wert 1 als Ergebnis ein. Ein iteratives Quadrieren der 1 führt zu einer 1. Somit entsteht eine Auslöschung. Erfindungsgemäß wird die rechenintensive Intervallarithmetik lediglich bei Bedarf, nämlich dann wenn ein Fehler zu erwarten ist, aktiviert.

Gemäß einem weiteren Aspekt der vorliegenden Erfindung werden alle variablen Operanden vor einer Berechnung in einen einzigen Datentyp umgewandelt. Dies hat den Vorteil, dass eine Umwandlung auf Maschinenebene vermieden wird und sich somit Probleme aus der Umwandlung von Operanden in Binärcode vermeiden lassen. So werden alle Variablen in das gleiche Datenformat überführt und Inkonsistenzen bzgl. inkompatibler Datentypen werden vermieden. Wird beispielsweise ein Integer auf einen Float multipliziert, so werden beide Datentypen beispielsweise in einen Double überführt und dann deren Operator berechnet. Somit kann auch zur Laufzeit festgestellt werden, ob ein Rundungsfehler auftritt.

Gemäß einem weiteren Aspekt der vorliegenden Erfindung erfolgt das Anwenden der ausgelesenen Steuerbefehle mittels eines Central Processor Unit (CPU) Kerns, eines GPU-Kerns, eines RISC-Prozessors, eines Coprozessors, eines Graphikprozessors, eines Arithmetikprozessors und/ oder einer bereitgestellten Berechnungseinheit. Dies hat den Vorteil, dass ein Prozessorkern auf eine Vielzahl von Möglichkeiten bereitgestellt werden kann. Insbesondere können mehrere Prozessoren verwendet werden, welche beispielsweise räumlich verteilt sind. Als Kommunikation der Prozessoren oder zumindest deren Kerne kann ein Netzwerk und/ oder ein Bus dienen, was allgemein als Datenleitung bezeichnet wird. Insbesondere ist es vorteilhaft die große Anzahl von RISC-Prozessoren, also Reduced Instruction Set Computer Prozessoren, zu benutzen und ferner Prozessoren zu kombinieren. So können alle Prozessoren parallel verwendet werden und zudem deren Teilprozessoren, als Coprozessoren oder Rechenmodule, parallel verwendet werden. Dies ist insbesondere deshalb vorteilhaft, da Grafikkarten typischerweise über eine Vielzahl von Recheneinheiten verfügen, welche sich überraschenderweise besonders zur Ausführung der vorliegenden Erfindung eignen.

Die Aufgabe wird auch gelöst durch eine Systemanordnung zur Verwendung in einer Mehrkernarchitektur und zum maschinennahen Berechnen von geschlossenen mathematischen Funktionen mit beliebiger Anzahl von Operanden, welche mittels Operatoren verknüpft sind, aufweisend eine Eingabeeinheit eingerichtet zum Bereitstellen der mathematischen Funktion aufweisend die Operanden und die Operatoren in beliebigem Format, eine Logikeinheit eingerichtet zum Überführen der bereitgestellten mathematischen Funktion in eine verkettete Liste, eine Spezifikationseinheit eingerichtet zum Spezifizieren der variablen Operanden und zum automatischen Auslesen mindestens eines Steuerbefehls, welcher geeignet ist den Operator auszuführen, aus einem bereitgestellten Operatorspeicher, eine Initialisierungseinheit eingerichtet zum Initialisieren der variablen Operanden anhand konkreter Parameter gemäß einem Datentyp, und eine Recheneinheit eingerichtet zum Anwenden der ausgelesenen Steuerbefehle auf die spezifizierten Operanden zur Berechnung der mathematischen Funktion.

Bevorzugt wird die Systemanordnung anhand eines Rechensystems bereitgestellt, welches erfindungsgemäß neuartig angesprochen und adressiert wird. Das Verfahren implementiert hierbei einen Hardware-Treiber. Das Verfahren kann beispielsweise computer-implementiert bzw. als maschinennahe Software bereitgestellt werden.

Die Aufgabe wird auch gelöst durch ein Computerprogrammprodukt mit Steuerbefehlen, welche das Verfahren ausführen und die vorgeschlagene Anordnung betreiben, wenn sie auf einem Computer zur Ausführung gebracht werden.

Erfindungsgemäß ist es besonders vorteilhaft, dass das Verfahren zum Betreiben der vorgeschlagenen Vorrichtungen und Einheiten verwendet werden kann. Ferner eignen sich die vorgeschlagenen Vorrichtungen und Einrichtungen zur Ausführung des erfindungsgemäßen Verfahrens. Somit implementiert jeweils die Vorrichtung strukturelle Merkmale, welche geeignet sind, das entsprechende Verfahren auszuführen. Die strukturellen Merkmale können jedoch auch als Verfahrensschritte ausgestaltet werden. Auch hält das vorgeschlagene Verfahren Schritte zur Umsetzung der Funktion der strukturellen Merkmale bereit.

Weitere Vorteile, Merkmale und Einzelheiten der Erfindung ergeben sich aus der nachfolgenden Beschreibung, in der unter Bezugnahme auf die Zeichnungen Aspekte der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Die gezeigten und beschriebenen Ausführungsformen sind nicht als abschließend zu verstehen, sondern haben beispielhaften Charakter zur Erläuterung der Erfindung. In den Figuren zeigen:

Figur 1: ein schematisches Ablaufdiagramm eines Verfahrens zur Verwendung in einer Mehrkernarchitektur gemäß einem Aspekt der vorliegenden Erfindung;

Figur 2: eine Systemanordnung zur Verwendung in einer Mehrkernarchitektur gemäß einem Aspekt der vorliegenden Erfindung;

Figur 3: eine Auswertung eines Anwendungsbeispiels gemäß einem Aspekt des Verfahrens gemäß der vorliegenden Erfindung;

Figur 4: eine weitere Auswertung eines Anwendungsbeispiels gemäß einem Aspekt des Verfahrens gemäß der vorliegenden Erfindung;

Figur 5: eine weitere Auswertung eines Anwendungsbeispiels gemäß einem weiteren Aspekt des Verfahrens gemäß der vorliegenden Erfindung;

Figur 6: ein Anwendungsbeispiel gemäß einem weiteren Aspekt der vorliegenden Erfindung mit einem Entscheidungsbaum mit Variablen und Kosten (oben) und eine Matrizenmultiplikation mit Variablen (unten); und

Figur 7:    eine Hardwareanordnung gemäß einem weiteren Aspekt der vorliegenden Erfindung.

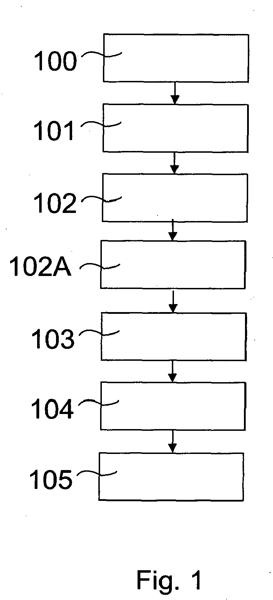

Figur 1 zeigt ein schematisches Ablaufdiagramm eines Verfahrens zur Verwendung in einer Mehrkernarchitektur und zum maschinennahen Berechnen von geschlossenen mathematischen Funktionen mit beliebiger Anzahl von Operanden, welche mittels Operatoren verknüpft sind, aufweisend ein Bereitstellen 100 der mathematischen Funktion aufweisend die Operanden und die Operatoren in beliebigem Format, ein Überführen 101 der bereitgestellten mathematischen Funktion in eine verkettete Liste, ein Spezifizieren 102 der variablen Operanden und ein automatisches Auslesen 102A mindestens eines Steuerbefehls, welcher geeignet ist den Operator auszuführen, aus einem bereitgestellten Operatorspeicher, ein Initialisieren 103 der variablen Operanden anhand konkreter Parameter gemäß einem Dateityp und ein Anwenden 104 der ausgelesenen Steuerbefehle auf die spezifizierten Operanden zur Berechnung der mathematischen Funktion unter Verwendung der verketteten Liste.

Der Fachmann erkennt hierbei, dass die Schritte weitere Unterschritte aufweisen können und insbesondere, dass die Verfahrensschritte jeweils iterativ und/ oder in anderer Reihenfolge ausgeführt werden können. Beispielsweise erfolgen die Schritte 102 und 102A in einem einzigen Schritt. Der Schritt des Anwendens 104 der ausgelesenen Steuerbefehle auf die spezifizierten Operanden erfolgt iterativ, solange bis die mathematische Funktion berechnet ist. Ebenfalls vorteilhaft ist ein Zuweisen 105 von Sequenzen der verketteten Liste, jede Sequenz aufweisend eine Teilmenge der bereitgestellten Operanden und bereitgestellten Operatoren, an Rechenkerne.

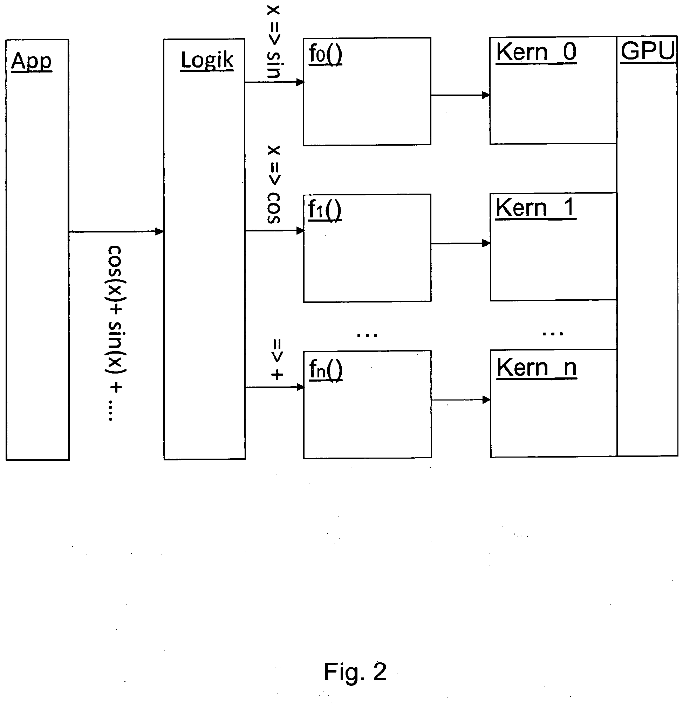

Figur 2 zeigt auf der linken Seite eine Anwendung, welche eine mathematische Funktion in einem beliebigen Format bereitstellt. Dies kann beispielsweise eine textuelle Eingabe sein, die Operanden und Operatoren spezifiziert. Hieraus wird eine verkettete Liste erzeugt, welche wiederum einzelne Sequenzen von Operatoren und Operanden aufweist. Somit ist es also möglich einzelne Teilfunktionen als Sequenzen zu definieren und diese dann zur parallelen Ausführung an einzelne Prozessoren oder Rechenkerne zuzuweisen.

Hierzu ist auf der rechten Seite eine Grafikkarte aufweisend eine GPU gezeigt, mit mehreren Prozessoren. Hierbei ist es also möglich die einzelnen Segmente parallel derart zu berechnen, dass unterschiedliche Prozessoren die Berechnungen ausführen. Hierbei erkennt der Fachmann, dass es besonders vorteilhaft ist, eine umfangreiche mathematische Funktion zu berechnen, da hier die Parallelisierung besonders performant zum Einsatz kommt. Ferner ist es möglich iterative Berechnungen besonders präzise durchzuführen, da entsprechende Speicher berücksichtigt werden und gegebenenfalls Maßnahmen ergriffen werden können, falls ein Speicher nicht ausreicht. Hierbei wird nicht auf den Speicherplatz insgesamt abgestellt, sondern vielmehr auf den Datentyp, der eine gewisse Anzahl von Bits vorsieht, die die entsprechenden Operanden bzw. Ergebnisse einnehmen können. Somit handelt es sich also bei einem Datentyp um eine Spezifikation einer gewissen Anzahl von Bits, die für Operanden und/ oder Ergebnisse zur Verfügung stehen.

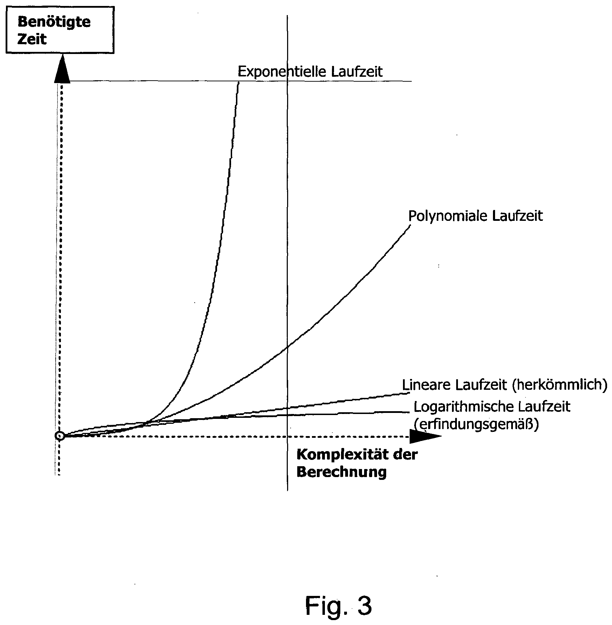

Figur 3 zeigt einen Rechenaufwand gemäß dem erfindungsgemäßen Verfahren. Je komplexer die Berechnungsanfrage, desto höher ist der benötigte Zeitaufwand. Wissenschaftliche Programme, Ingenieurssoftware, gängige Datenbanken oder proprietäre Berechnungsprogramme benötigen üblicherweise einen polynomialen oder sogar exponentiellen Zeitaufwand. Komplexe Berechnungen benötigen zu lange oder können gar nicht verarbeitet werden. Proprietäre Codes der üblichen Ingenieursoftware bieten zwar lineare Laufzeit. Diese lassen aber dann keine Flexibilität oder weitere Optimierungen der Laufzeit zu und müssen gepflegt werden.

Des Weiteren ist die vorliegende Erfindung als Modul in jede Software integrierbar und die Programmgröße passend für kleine Prozessoren. Der Aufwand bei der Standardprogrammierung für die Behandlung von mathematischen Berechnungen ist sehr hoch. Dieser Aufwand steigt auch erheblich weiter mit der Anzahl und Komplexität der mathematischen Modelle und der Anzahl der Eingangsvariablen. Und damit steigen auch das Risiko von Fehlern und die Kosten für die Beseitigung von Programmfehlverhalten.

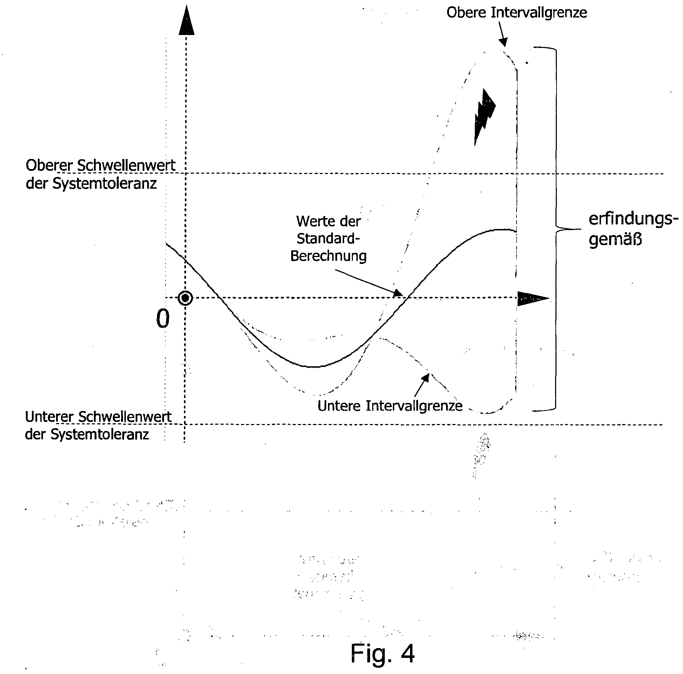

Figur 4 zeigt eine Auswertung eines Anwendungsbeispiels gemäß einem Aspekt der vorliegenden Erfindung. Je komplexer ein mathematisches Modell ist, umso wichtiger ist auch seine Präzision. Aber im Allgemeinen kann sich die Präzision rapide in Abhängigkeit von der Komplexität des zugrundeliegenden mathematischen Modells bzw. der Länge der Funktionen und der Anzahl der Variablen verschlechtern.

Es ist deshalb häufig sinnvoll, den maximalen Fehler einer Berechnung zeitnah zu bestimmen. Nur dann kann man entscheiden, ob das Ergebnis, das System oder ein Produkt noch in einem Toleranzbereich operiert und entsprechende Maßnahmen ergreifen. Bei der vorliegenden Erfindung ist die Möglichkeit, Ergebnisintervalle zu bestimmen, in allen mathematischen Teilfunktionen implementiert. Dadurch lässt sich eine im Vergleich zu anderen Lösungen einzigartige Genauigkeit bei den Berechnungen erzielen.

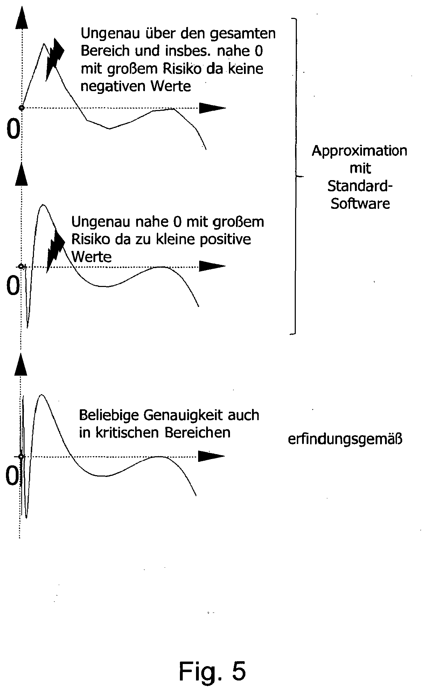

Figur 5 zeigt oben eine Approximation basierend auf 10 Messwerten, in der Mitte eine Approximation basierend auf 100 Messwerten und unten eine Approximation basierend auf 10.000 Messwerten gemäß einem Aspekt der vorliegenden Erfindung. Häufig werden bspw. in der Ingenieursmathematik sehr große Messreihen von komplexen Produkten dargestellt. Im Anschluss wird hieraus mit Hilfe von Approximationen ein mathematisches Modell abgeleitet, um dieses in der Software beschreiben zu können. Dieser Arbeitsschritt kann ohne die vorliegende Erfindung sehr aufwendig und zeitintensiv sein. Denn aufgrund der Größe der relevanten Punkte in der Messreihe kann im Allgemeinen keine triviale beschreibende mathematische Funktion gefunden werden.

Ein Beispiel sei ein Auto, das nach Ausstattung und Güte der Sensoren unterschiedliche Parameter aufweist. Zudem ist wegen leichten Abweichungen im Fertigungsprozess und den Materialeigenschaften jedes Auto unterschiedlich zu dem anderen und benötigt eine eigene Anpassung. Die Approximationen müssen also individuell erstellt werden, maximal präzise und schnell verfügbar sein.

Ein einfaches Beispiel: Man möchte eine Approximation für die Messwerte (1,5; 6), (2,5; 3) und (3,5; 25) erzeugen, indem die Messwerte durch Geraden verbunden werden. Diese Funktion kann sofort an eine erfindungsgemäß implementierte Einheit übergeben werden:

$$f(x)= ((x>=1.5) \text{ AND } (x<=2.5))*(((3-6)/(2.5-1.5))*(x-1.5)+6)$$
$$+ ((x>2.5) \text{ AND } (x<=3.5))*(((25-3)/(3.5-2.5))*(x-2.5)+3)$$

Erfindungsgemäß lässt sich dies vorteilhaft parallelisieren. Dies gilt auch wenn bspw. auf den Teilabschnitten andere Approximationen geeigneter sind wie trigonometrische oder polynomiale oder andere.

Die vorliegende Erfindung bietet die Möglichkeit die mathematischen Funktionen, die das Modell eines Produktes kennzeichnen, separat in einer geschützten Datei zu speichern. Beim Start des Produktes, z.B. eben dem Auto, würde dann eine geschützte Bibliothek mit signierter Software initialisiert werden, z.B. auch auf einem separaten Mikro-Controller und die mathematischen Funktionen geladen sowie die Berechnungsobjekte erzeugt werden.

Diese Funktionen $f\_1...f\_n$ definieren dabei, wie mit den Eingangsvariablen $x\_1...x\_m$ zu verfahren ist, z.B.

- wie Sensorwerte, die auf das Produkt einwirken, verifiziert werden müssen,
- wie mathematische Werte zu Algorithmen des Produktes (wie Kurvenfahrten, Mustererkennung, prädiktive Analyse) immer wieder bestimmt werden müssen,
- wie Wahrscheinlichkeitsdaten immer wieder berechnet werden müssen
- wie Signale bewertet werden müssen, um das Produkt vor Fehlverhalten oder Zerstörung zu bewahren.

Diese als Beispiel beschriebene Anwendung kann unabhängig vom Produkt dann zur Identifikation von Anomalien, insbesondere Hacking, verwendet werden, als sogenannte separate Watchdog-Anwendung. Sie kann auch eine Black-Box Datei zur Fehleranalyse erzeugen, die im Servicefall herangezogen werden kann. Oder die Werte werden dann an die Anwendung oder das Produkt zurückgegeben, z.B. dem Auto und dem Benutzer ein entsprechender Warnhinweis gegeben werden.

Man arbeitet indem man grundsätzlich ein Berechnungsobjekt für eine mathematische Funktion mit Aufrufen der Bibliothek erzeugt, dieses anwendet (d.h. Berechnungen wiederholt mit Variablen durchführt) und dann dieses wieder löscht. Die Anzahl der Berechnungsobjekte, die erzeugt werden können ist hierbei unbeschränkt genauso wie die Länge der Funktion und die Anzahl der Variablen. Im Allgemeinen wird bei computerbasierten mathematischen Berechnungen nur ein Prozessor genutzt. Durch die Architektur von der vorliegenden Erfindung kann diese Limitierung, die seit den 1970er existiert ganz einfach durchbrochen werden.

Die Berechnungsobjekte werden vom Benutzer definiert über die Funktion $f(x\_1...x\_m)$ als Textzeichenkette und die zu verwendenden Variablenbezeichner. $x\_1...x\_m$ Ebenfalls wird vom Benutzer festgelegt, ob Intervallarithmetik bei den Berechnungen, die mit dem Berechnungsobjekt durchgeführt werden, verwendet werden soll. Die Erzeugung wird in einem einzigen Durchlauf durchgeführt. Hierfür wurde ein schneller Parser und Lexer entwickelt, der spezifisch für mathematische Funktionen beliebiger Länge geeignet ist. Hierbei wird das Berechnungsobjekt und die Unterobjekte für jeden einzelnen Berechnungsschritt erzeugt. Die Laufzeit ist $O(n)$, d.h. linear, wobei n die Länge der Textzeichenkette der Funktion ist.

Die Erfindung ist durch diese Architektur in der Lage Mehrprozessorsysteme maximal schon bei der Erzeugung zu nutzen und die Benötigte Zeit der Erzeugung noch signifikant zu verkürzen. Hierbei wird die Funktion in geeignete Teilfunktionen $[f(x\_1...x\_m)=g\_1... g\_k$ innerhalb der Bibliothek zerlegt (bspw. bei k verfügbaren Prozessoren), daraus k Berechnungsobjekte erzeugt und in einem Hauptberechnungsobjekt verwaltet. Die ID dieses Hauptberechnungsobjektes wird an den Benutzer zurückgegeben.

Hat man mit gemäß der vorliegenden Erfindung ein Berechnungsobjekt für eine mathematische Funktion erzeugt, so kann man auf diesem Berechnungen durchführen. Die Geschwindigkeit ist maximal weil alle Prozessoren der zugrunde liegenden Hardware verwendet werden. Die Genauigkeit ist maximal weil die die Kontrolle über alle Berechnungen innerhalb der Bibliothek stattfinden, sowie Rundungsfehler und Fehler bei Typumwandlungen maximal eliminiert sind. Zudem wird beim Auftreten von Rundungsfehlern optional die Intervallarithmetik durchgeführt.

Der Benutzer gibt Zahlenwerte für ein vorher erzeugtes Berechnungsobjekt an. Es werden alle Berechnungen durchgeführt, indem die verkette Liste der einzelnen Berechnungsschritte durchlaufen wird. Hierbei wird eine C-basierte sehr schnelle Routine verwendet. Die Laufzeit ist wiederum O(n), d.h. linear, wobei n diesmal die Länge der verketteten Liste ist, die die einzelnen Berechnungsschritte repräsentiert. Diese ist i.a. viel kürzer als die Länge der ursprünglichen Textzeichenkette, die die Funktion beschrieben hat.

Die Erfindung ist durch diese Architektur in der Lage Mehrprozessorsysteme maximal auch bei der Berechnung zu nutzen und die benötigte Zeit nochmals signifikant zu verkürzen. Denn zum einen werden die Berechnungen parallelisiert ausgeführt für alle Funktionen $g\_1...g\_k$ in die vorher bei der Erstellung die Funktion $f(x\_1...x\_m)$ intern zerlegt wurde. Zum anderen werden Berechnungsergebnisse von Teilsequenzen zwischengespeichert und müssen nicht erneut berechnet werden. Insgesamt ergibt sich dann sogar eine bessere Laufzeit als O(n).

Bei einer Reihenberechnung von Berechnungen mit m Variablen, gibt der Benutzer diesmal n*m Zahlenwerte für ein vorher erzeugtes Berechnungsobjekt an. Es werden alle n*m Berechnungen durchgeführt wie vorher. Die Laufzeit ist wiederum O(n), d.h. linear, wobei n diesmal die Anzahl der Reihenberechnung ist.

Die Erfindung ist durch seine Architektur wieder in der Lage Mehrprozessorsysteme maximal auch bei der Reihenberechnung zu nutzen und die benötigte Zeit wieder signifikant zu verkürzen. Denn zum einen werden die n*m Einzelberechnungen parallelisiert auf den zur Verfügung stehenden Prozessoren ausgeführt. Zum anderen werden Berechnungsergebnisse von Teilsequenzen ebenso wie vorher zwischengespeichert und müssen nicht erneut berechnet werden. Insgesamt ergibt sich dann eine bessere Laufzeit als O(n).

Moderne Grafikkarten bieten die Möglichkeit die GPU mit mehreren tausend RISC Prozessoren, die diese haben für mathematische Berechnungen zu verwenden. Aufgrund seiner einzigartigen Architektur kann die Erfindung dies sich zu Nutze machen und die Geschwindigkeit nochmals um das hundert fache oder mehr steigern. Die Programmierschnittstelle ist für den Benutzer vollkommen transparent. Er verwendet immer dieselben Befehle und es wird die vorhandene Hardware maximal genutzt.

Die Erfindung identifiziert und verwendet alle vorhandenen GPUs im System. Die Laufzeit ist O(n), d.h. linear, wobei n diesmal die Länge der verketteten Liste ist, die die einzelnen Berechnungsschritte repräsentiert. Allerdings ist diesmal die Laufzeit nochmals signifikant verkürzt durch die potentielle Anzahl der RISC Prozessoren der GPU. D.h. man erreicht ein sog. Supercomputing selbst auf Standardsystemen.

Aufgrund der Möglichkeiten der Erfindung lassen sich Komponenten frei skalieren je nach Anforderung:

1. Mikroprozessor oder Mikrocontroller bspw. INTEL, ARM...
2. Architektur; RISC (bspw. ARM) oder CISC Architektur (bspw. INTEL) sowie 16-Bit bis 64-Bit
3. Systemtakt bspw. 32 MHz bis mehrere Gigahertz
4. Speicher, wenige hundert Kilobyte bis mehrere Gigabyte
5. Betriebssystem bspw. Linux, Windows oder auch proprietäre oder spezialisierte Betriebssysteme
6. Bussystem bspw. USB, HSI oder SPI oder Netzwerk bspw. TCP/ IP insbes. Echtzeit-Ethernet wie EtherCAT
7. Stufe der Systemsicherheit

Vorliegend nicht gezeigt ist ein Datenspeicher oder ein computerlesbares Medium mit einem Computerprogrammprodukt aufweisend Steuerbefehle, welche das vorgeschlagene Verfahren implementieren bzw. die vorgeschlagene Systemanordnung betreiben, wenn sie auf einem Computer zur Ausführung gebracht werden.

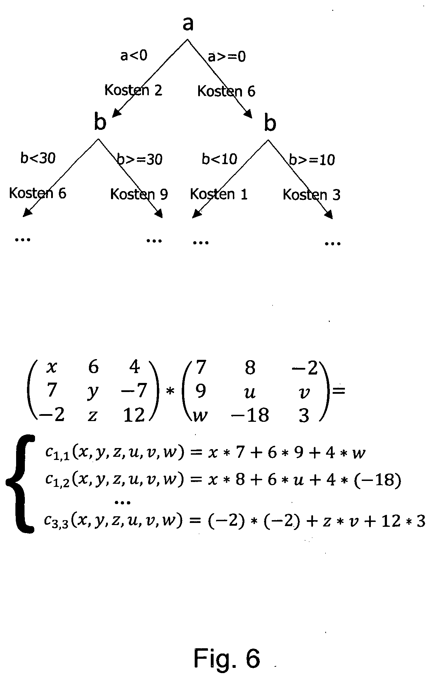

Figur 6 zeigt ein Anwendungsbeispiel gemäß einem weiteren Aspekt der vorliegenden Erfindung mit einem Entscheidungsbaum mit Variablen und Kosten (oben) und eine Matrizenmultiplikation mit Variablen (unten). Die Erfindung bietet viele Vorteile aufgrund der verbesserten Lesbarkeit, der hochgradigen Parallelisierbarkeit, der nicht beschränkten Länge der Funktionen und der nicht beschränkten Anzahl der Variablen. Weitere Beispiele sind Entscheidungsbäume mit Kosten für die einzelnen Entscheidungen und Matrizenmultiplikationen mit Variablen, welche erfindungsgemäß realisiert werden können.

Zur Anschaulichkeit sei ein Entscheidungsbaum mit jeweils zwei Ästen und den Variablen a und b gegeben. So kann man eine einzige Funktion für alle Wege erstellen, die erfindungsgemäß abhängig von den Variablen a und b berechnet werden können. Diese Funktion kann sofort erfindungsgemäß verarbeitet werden:

$$f(a, b) = ((a<0) \text{ AND } (b<30)) * (2+6) \ + ((a<0) \text{ AND } (b>=30)) * (2+9)$$
$$+ ((a>=0) \text{ AND } (b<10)) * (6+1) + ((a>=0) \text{ AND } (b>=10)) * (6+3)$$

Erneut lässt sich dies gemäß einem Aspekt der vorliegenden Erfindung vorteilhaft parallelisieren. Das Beispiel kann natürlich auf beliebig viele Äste und Variablen erweitert werden. Die Funktion wird sehr lang je mehr Variablen verwendet werden. Seien dies beispielsweise Werte von 20 Sensoren in einem System und habe jeder Sensor zwei Entscheidungen so wären dies $2^{20}= 1.048.576$ mögliche Entscheidungswege. Müsste man ein Programm für alle diese Entscheidungswege schreiben, so würde dies sehr umfangreich und sehr schwer zu warten sein. Zudem wäre es komplex und fehleranfällig, wenn sich die Kosten ändern, Sensoren hinzukommen oder Entscheidungen dynamisch gefällt werden müssten. Erfindungsgemäß ist dies dagegen kein Problem.

Bei der Multiplikation zweier Matrizen wird man für jeden Eintrag ein Berechnungsobjekt erfindungsgemäß erzeugen. Also in diesem Beispiel 9 Berechnungsobjekte, die dann mit Werten für die Variablen x,y,z,u,v und w berechnet werden. Wieder kann das Beispiel beliebig erweitert werden da es keine Begrenzung der Anzahl der Berechnungsobjekte gibt.

Dies sind nur zwei nicht abschließende Beispiele, wobei also gewichtete gerichtete Graphen, Skalarprodukte, Vektormultiplikationen, Hidden Markov Modelle für schnelle Gestenerkennung, Transformationen (DCT, FFT), Polynome, Eigenwerte, Mustererkennung wie die Gesichtserkennung nach der Viola-Jones-Methode... usw. ebenfalls erfindungsgemäß realisiert werden können.

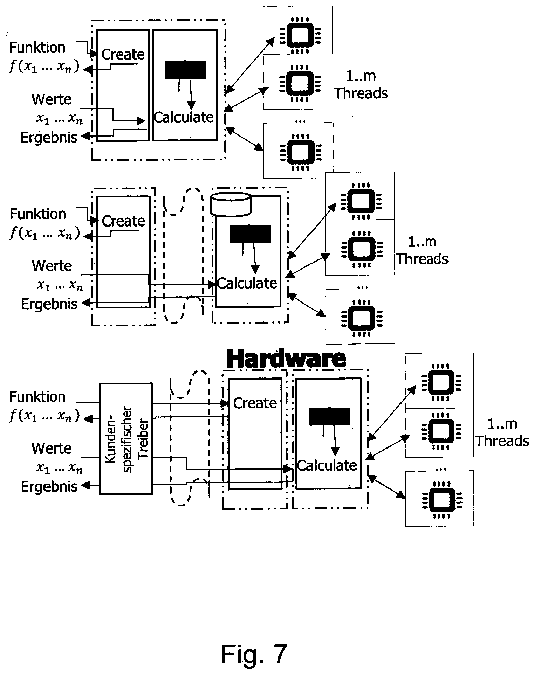

Figur 7 zeigt eine Hardwareanordnung gemäß einem weiteren Aspekt der vorliegenden Erfindung. Somit zeigt Figur 7: 1. Referenz SDK gemäß einem Aspekt der vorliegenden Erfindung (oben); 2. Berechnungsserver gemäß einem Aspekt der vorliegenden Erfindung (Mitte); und 3. Mathematischen Coprozessor gemäß einem Aspekt der vorliegenden Erfindung (unten).

Es wird gemäß einem Aspekt der vorliegenden Erfindung zuerst ein Berechnungsobjekt erzeugt (Schritt "Create") indem der Benutzer eine Funktion und die Menge der Variablenbezeichner übergibt. Dann können mit dem einmal erzeugten Objekt immer wieder konkrete Berechnungen durchgeführt werden (Schritt "Calculate") indem der Benutzer die Werte für die Variablen übergibt.

Im Schritt "Create" wird mit dem Berechnungsobjekt eine Liste als Berechnungsvorschrift erzeugt und auf maximale Parallelisierbarkeit ausgerichtet. Der Benutzer erhält eine eindeutige ID für das erzeugte Objekt zurück. Es kann eine beliebige Anzahl an Berechnungsobjekten erzeugt werden. Zudem gibt es keine Begrenzung der Funktionslänge und der Anzahl der Variablen.

Im Schritt "Calculate" wird die Berechnung mit den Werten für die Variablen durchgeführt. Dabei wird die Liste der Berechnungsvorschrift als Teilsequenzen auf alle verfügbaren Prozessoren (hier "Threads") des Systems verteilt, um eine maximale Geschwindigkeit zu erzielen. Zusätzlich werden einmal durchgeführte aufwendige Berechnungen von Teilsequenzen zwischengespeichert (hier "Cache") damit diese gegebenenfalls nicht erneut berechnet werden müssen.

Durch diese Vorgehensweise ergeben sich verschiedene Möglichkeiten der Implementierung in Software und Hardware. Figur 7 oben zeigt die Referenzimplementierung des Software Development Kit (SDK), das den Schritt "Calculate" auf alle verfügbaren Prozessorkerne (CPUs und/oder GPUs) im System verteilt. Figur 7 Mitte und Figur 7 unten zeigen weitere Varianten, wobei die Schritte "Create" und "Calculate" logisch und/oder physikalisch getrennt sind. Figur 7 Mitte ist dabei ein sehr schneller Berechnungsserver. Da der Schritt "Calculate" eine reine ANSI C-Funktion ist kann diese auch komplett oder teilweise in Hardware (ASICs, FPGAs und CPLDs) realisiert werden. Dies wird in Figur 7 unten dargestellt als neuartiger mathematischer Coprozessor.

Weiterhin ist es ein Aspekt der Erfindung, dass man mathematische Funktionen mit logischen Operationen (NOT, AND, OR, XOR, NAND, XNOR, ...) und Vergleichsoperatoren (<, >, =, >=, <=, <>, ...) kombinieren kann.

Erfindungsgemäß kann mit der vorliegenden technischen Lehre signifikant Strom und dabei auch Hitze eingespart werden. Zum einen aus der gebotenen Parallelität selbst indem die Last und somit der Stromverbrauch und die daraus resultierende Hitzeentwicklung auf alle verfügbaren Prozessoren verteilt wird. Zum anderen daraus, dass die Berechnungen selbst nicht auf dem Hauptprozessor durchgeführt, sondern physikalisch entfernt auf weiteren Prozessoren oder noch weiter auf Servern (bspw. über TCP/IP verbunden). Und zum dritten da die Genauigkeit einstellbar ist, indem Berechnungen mit geringerer Genauigkeit durchgeführt werden als den standardmäßigen Gleitkommazahlen mit doppelter Genauigkeit (double precision mit 64 bit) oder höher (wie long double mit 80 bit oder quad precision mit 128 bit). Der Benutzer kann bspw. einstellen, dass er Berechnungen nur mit Gleitkommazahlen einfacher Genauigkeit (single precision mit 32 bit) durchgeführt haben möchte wodurch sich die Last mindestens halbiert. Ferner zum vierten, da die Laufzeitkontrolle innerhalb des Treibers liegt, kann man optional einen Regler vorsehen, der Wartezyklen durchläuft wenn die Hitzeentwicklung zu stark ist und Berechnungen von Teilsequenzen verlangsamt. Somit kann eine Pause zwischen Operationen bzw. Verfahrensschritten spezifiziert werden.

**Patentansprüche**

1.  Verfahren zum maschinennahen Berechnen von geschlossenen mathematischen Funktionen mit beliebiger Anzahl von Operanden, welche mittels Operatoren verknüpft sind, und zur Verwendung in einer Mehrkernarchitektur, aufweisend:

- ein Bereitstellen (100) der mathematischen Funktion aufweisend die Operanden und die Operatoren in beliebigem Format;
- ein Überführen (101) der bereitgestellten mathematischen Funktion in eine verkettete Liste;
- ein Spezifizieren (102) der variablen Operanden und ein automatisches Auslesen (102A) mindestens eines Steuerbefehls, welcher geeignet ist den Operator auszuführen, aus einem bereitgestellten Operatorspeicher;
- ein Initialisieren (103) der variablen Operanden anhand konkreter Parameter gemäß einem Datentyp; und
- ein Anwenden (104) der ausgelesenen Steuerbefehle auf die Operanden zur Berechnung der mathematischen Funktion unter Verwendung der verketteten Liste.

2. Verfahren nach Anspruch 1, **dadurch gekennzeichnet, dass** ein Zuweisen (105) von Sequenzen der verketteten Liste, jede Sequenz aufweisend eine Teilmenge der bereitgestellten Operanden und bereitgestellten Operatoren, an Rechenkerne in Abhängigkeit einer ausgelesenen Anzahl von verfügbaren Rechenkernen erfolgt.

3. Verfahren nach Anspruch 2, **dadurch gekennzeichnet, dass** das Zuweisen (105) unter Verwendung von abgespeicherten Parallelisierungskriterien erfolgt.

4. Verfahren nach einem der vorhergehenden Ansprüche, **dadurch gekennzeichnet, dass** die verkettete Liste als eine Abfolge jeweils atomarer Operanden und Operatoren vorliegt.

5. Verfahren nach einem der vorhergehenden Ansprüche, **dadurch gekennzeichnet, dass** Berechnungsergebnisse von Sequenzen mittels eines flüchtigen Speichers bereitgestellt werden.

6. Verfahren nach Anspruch 5, **dadurch gekennzeichnet, dass** bei einem zweiten Berechnen einer Sequenz auf das Ergebnis eines ersten, vorherigen Berechnens dieser Sequenz zurückgegriffen wird.

7. Verfahren nach Anspruch 5 oder 6, **dadurch gekennzeichnet, dass** ein Abspeichern von und/ oder ein Zurückgreifen auf Ergebnisse von Berechnungen von Sequenzen in Abhängigkeit mindestens eines Betriebsparameters des flüchtigen Speichers und mindestens eines Betriebsparameters eines zu verwendenden Rechenkerns erfolgt.

8. Verfahren nach Anspruch 7, **dadurch gekennzeichnet, dass** das Abspeichern und/ oder das Zurückgreifen ein Auslesen mindestens eines Werts aus dem flüchtigen Speicher und dem zu verwendenden Rechenkern umfasst, wobei dieser Wert einen Hinweis auf eine Performanz der Berechnung bereitstellt.

9. Verfahren nach einem der vorhergehenden Ansprüche, **dadurch gekennzeichnet, dass** das Abspeichern und/ oder das Zurückgreifen in Abhängigkeit eines Referenzberechnens einer Berechnungsgüte und/ oder einer Berechnungsperformanz erfolgt.

10. Verfahren nach Anspruch 9, **dadurch gekennzeichnet, dass** die Berechnungsgüte einen Berechnungsfehler beschreibt, der aufgrund eines verfügbaren Wertebereichs entsteht.

11. Verfahren nach einem der vorhergehenden Ansprüche, **dadurch gekennzeichnet, dass** bei einem Erkennen mindestens eines Rundungsfehlers bei einem Berechnen von Sequenzen automatisiert eine Intervallarithmetik zum Anwenden (104) der ausgelesenen Steuerbefehle verwendet wird.

12. Verfahren nach einem der vorhergehenden Ansprüche, **dadurch gekennzeichnet, dass** alle variablen Operanden vor einer Berechnung in einen einzigen Datentyp umgewandelt werden.

13. Verfahren nach einem der vorhergehenden Ansprüche, **dadurch gekennzeichnet, dass** das Anwenden (104) der ausgelesenen Steuerbefehle mittels eines CPU-Kerns, eines GPU-Kems, eines RISC-Prozessors, eines Coprozessors, eines Graphikprozessors, eines Arithmetikprozessors und/ oder einer bereitgestellten Berechnungseinheit erfolgt.

14. Systemanordnung zur Verwendung in einer Mehrkernarchitektur und zum maschinennahen Berechnen von geschlossenen mathematischen Funktionen mit beliebiger Anzahl von Operanden, welche mittels Operatoren verknüpft sind, aufweisend:

- eine Eingabeeinheit eingerichtet zum Bereitstellen (100) der mathematischen Funktion aufweisend die Operanden und die Operatoren in beliebigem Format;

- eine Logikeinheit eingerichtet zum Überführen (101) der bereitgestellten mathematischen Funktion in eine verkettete Liste;

- eine Spezifikationseinheit eingerichtet zum Spezifizieren (102) der variablen Operanden und zum automatischen Auslesen mindestens eines Steuerbefehls, welcher geeignet ist den Operator auszuführen, aus einem bereitgestellten Operatorspeicher;

- eine Initialisierungseinheit eingerichtet zum Initialisieren (103) der variablen Operanden anhand konkreter Parameter gemäß einem Datentyp; und

- eine Recheneinheit eingerichtet zum Anwenden (104) der ausgelesenen Steuerbefehle auf die Operanden zur Berechnung der mathematischen Funktion.

15. Computerprogrammprodukt mit Steuerbefehlen, welche das Verfahren nach einem der Ansprüche 1 bis 13 ausführen, wenn sie auf einer Recheneinheit zur Ausführung gebracht werden.

Fig. 1

Fig. 2

Fig. 3

Fig. 4

Ungenau über den gesamten
Bereich und insbes. nahe 0
mit großem Risiko da keine
negativen Werte

0

Ungenau nahe 0 mit großem
Risiko da zu kleine positive
Werte

0

Approximation
mit
Standard-
Software

Beliebige Genauigkeit auch
in kritischen Bereichen

0

erfindungsgemäß

Fig. 5

a

a<0     a>=0

Kosten 2     Kosten 6

b          b

b<30   b>=30    b<10    b>=10

Kosten 6   Kosten 9   Kosten 1   Kosten 3

...        ...    ...       ...

$$\begin{pmatrix} x & 6 & 4 \\ 7 & y & -7 \\ -2 & z & 12 \end{pmatrix} * \begin{pmatrix} 7 & 8 & -2 \\ 9 & u & v \\ w & -18 & 3 \end{pmatrix} =$$

$$\begin{cases} c_{1,1}(x,y,z,u,v,w) = x*7 + 6*9 + 4*w \\ c_{1,2}(x,y,z,u,v,w) = x*8 + 6*u + 4*(-18) \\ \quad\quad ... \\ c_{3,3}(x,y,z,u,v,w) = (-2)*(-2) + z*v + 12*3 \end{cases}$$

# Fig. 6

Fig. 7

**Europäisches Patentamt**
**European Patent Office**
**Office européen des brevets**

# EUROPÄISCHER RECHERCHENBERICHT

Nummer der Anmeldung

EP 17 00 0558

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | RICHARD P BRENT: "The Parallel Evaluation of General Arithmetic Expressions", JOURNAL OF THE ASSOCIATION FOR COMPUTING MACHINERY, ACM, NEW YORK, NY, US, Bd. 21, Nr. 2, 1. April 1974 (1974-04-01), Seiten 201-206, XP058292603, ISSN: 0004-5411, DOI: 10.1145/321812.321815 * das ganze Dokument * | 1-15 | INV. G06F9/38 |
| X | ELIEZER DEKEL ET AL: "Parallel Generation of Postfix and Tree Forms", ACM TRANSACTIONS ON PROGRAMMING LANGUAGE AND SYSTEMS, ACM, NEW YORK, NY, Bd. 5, Nr. 3, 1. Juli 1983 (1983-07-01), Seiten 300-317, XP058095801, ISSN: 0164-0925, DOI: 10.1145/2166.357211 * das ganze Dokument * | 1-15 | |
| X | EP 0 527 622 A2 (LOTUS DEV CORP [US]) 17. Februar 1993 (1993-02-17) * Abbildung 1 * * Seite 3, Zeile 27 - Zeile 48 * * Seite 5, Zeile 5 - Seite 7, Zeile 43 * | 1-15 | RECHERCHIERTE SACHGEBIETE (IPC) |
| A | Steven S. Skiena: "The Algorithm Design Manual", , 1. Januar 2008 (2008-01-01), Seiten 274-279, XP055412904, London DOI: 10.1007/978-1-84800-070-4 ISBN: 978-1-84800-069-8 Gefunden im Internet: URL:http://www.springer.com/gp/book/978184 8000698 [gefunden am 2017-10-05] * das ganze Dokument * | 5-10 | G06F |

Der vorliegende Recherchenbericht wurde für alle Patentansprüche erstellt

| Recherchenort | Abschlußdatum der Recherche | Prüfer |
|---|---|---|
| Den Haag | 5. Oktober 2017 | Wirtz, Hanno |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 00 0558

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-10-2017

| Im Recherchenbericht angeführtes Patentdokument | Datum der Veröffentlichung | Mitglied(er) der Patentfamilie | Datum der Veröffentlichung |
|---|---|---|---|
| EP 0527622 A2 | 17-02-1993 | CA 2074769 A1 | 10-02-1993 |
| | | EP 0527622 A2 | 17-02-1993 |
| | | JP 3509027 B2 | 22-03-2004 |
| | | JP H07234775 A | 05-09-1995 |
| | | US 5819102 A | 06-10-1998 |
| | | US 5862400 A | 19-01-1999 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015005310 A1

**In der Beschreibung aufgeführte Nicht-Patentliteratur**

- Wikipedia, Die freie Enzyklopädie. 14. Marz 2017